Europäisches Patentamt

European Patent Office

Office européen des brevets

(19)

(11) Publication number: **0 351 909 B1**

# EUROPEAN PATENT SPECIFICATION

(12)

(45) Date of publication of patent specification: **08.12.93**

(51) Int. Cl.⁵: **C08J 5/06**, C25F 1/06, C25D 5/36

(21) Application number: **89201852.4**

(22) Date of filing: **13.07.89**

Consolidated with 89908704.3/0407476
(European application No./publication No.) by
decision dated 14.08.92.

(54) **A steel wire for the reinforcement of elastomers.**

(30) Priority: **19.07.88 EP 88201563**

(43) Date of publication of application:
**24.01.90 Bulletin  90/04**

(45) Publication of the grant of the patent:
**08.12.93 Bulletin  93/49**

(84) Designated Contracting States:
**AT BE DE ES FR GB IT LU NL**

(56) References cited:
**EP-A- 0 209 168
US-A- 2 422 903**

(73) Proprietor: **N.V. BEKAERT S.A.
Bekaertstraat 2
B-8550 Zwevegem(BE)**

(72) Inventor: **Coppens, Wilfried
Cyriel Verschaevestraat 7
B-8510 Kortrijk-Marke(BE)**
Inventor: **Chambaere, Daniel
2172 S. Cleveland-Massillon Rd.
Copley Ohio 44321(US)**
Inventor: **Vanhee, Willy
Architekt Vanhoornelaan 17
B-8640 Moorsele(BE)**

Rank Xerox (UK) Business Services
(3. 10/3.6/3.3. 1)

## Description

The invention relates to a round steel wire for the reinforcement of elastomers having a roughened surface and a metal coating for increasing the adhesion capacity to elastomers, in particular a bead wire for reinforcing a vehicle tire bead.

Bead wire with a round, rectangular or square cross-section is known. In general bead wires have a thin metal coating such as copper, bronze or brass on their surface to promote the adhesion to the elastomers which they have to reinforce. During the manufacture of bead wire, the last step is generally the coating step with the thin copper or brass layer. This is different from the manufacturing process for brass coated wire for tire cord used to reinforce the belt and/or carcass portions of a tire. Wire for tire cord is generally drawn after the coating is applied to the wire surface. In this way the coated wire obtains a rather smooth surface. This is not always true for bead wire which, even after coating with a thin layer of copper or brass may retain a rather rough surface. It is believed that surface roughness in some instances may promote the anchoring of the surrounding rubber to the bead wire surface. In this way efforts have been made in the past to provide an extra rough surface by deep etching a steel wire for rubber reinforcement before coating it with copper. This etching process however is a slow process and the deep etching generally adversely affects a durable bond of the copper to ferrous oxyde or carbide grains which become exposed at the wire surface due to said deep etching.

It is now an object of the present invention to avoid said drawbacks and to produce a wire with a controllable micro-roughening at its surface in view of maximal increase of the adhesion capacity to elastomers. The microroughening effect according to the invention is substantially different from and much finer than the rather coarse roughness of a wire surface obtained eg. by wire drawing. In fact the microroughness is superposed on the base of and generally follows the pattern of the coarser irregularities of a conventional wire surface.

The surface conditioning treatment according to the invention offers further a fast, continuous and controllable process which avoids the drawbacks of deep etching and which produces said typical microsurface roughening with the effect of a drastically improved adhesion performance to rubbers. So far the mechanism of the improved adhesion behaviour is not fully understood. According to the invention the bare circular steel wire (i.e. from which an adhesion promoting coating layer has been removed), eg. a bead wire with a diameter d between 0,8 mm and 2 mm, (particularly between 0,89 and 1,60 mm) will offer a brightness factor (L-value as defined below) meeting the relation $38 \leq L.d^{1/3} \leq 50$.

The L-value is determined and defined by means of the Chromameter II-Reflectance (Minolta). The L-value is determined on the bare steel wire, i.e. either before a copper, bronze or brass coating is applied to the wire surface or after said coating has been removed from a coated wire. The L-value could in principle also be measured on the coated wire. However to avoid influences of coating color (shades of yellow, red or brown) on the L-value, applicant has choosen to measure only on bare wires (after removal of the metal coating as described further). Possible color effects are thus isolated from natural brightness (or lack of brightness). Reference L-values are first determined of a standard white substrate accompanying the Chromameter in view of calibration of said measuring instrument. With the standard CIE illuminant C (6774 K) the reference L-value used by applicant is 97,30 on the white plate. Surface roughened bare bead wires with a diameter d of 0,96 mm were found to offer, after applying a copper or bronze coating of about 0,5 to 2 g of coating metal per m$^2$ of wire, a favourable adhesion behaviour when their L-value was situated between about 40 and 50 for the bare wires (i.e. after removal of the coating with a persulfate solution as indicated in the example below.). For a similarly roughened (and coated) bead wire with a diameter d of 1,55 mm, L-values between 33 and 45 on the bare wires showed a considerably improved adhesion level. The specific adhesion values are given in the examples below. For the purpose of measuring the brightness L, a series of wires are arranged side by side against each other on a platform just below the measuring tip of the measuring head. The measuring area at said tip is a circle with a diameter of 8 mm.

Wires with a rectangular cross section, treated according to the invention and similarly examined in a side by side arrangement under the measuring head of the Chromameter II generally offer a larger L-value for a comparative micro-surface roughening with the result of a similar adhesion capacity increase. This can be explained by the fact that the light reflection pattern (as input for the registered L-value) of said rectangular wires is less scattered than for circular wires

The invention provides also some processing possibilities to attain the specific micro-roughening effect on the wire surface in a controllable way.

In general, the roughening effect can be produced by any suitably controlled continuous etching process during pickling such as an electrolytic pickling in a sulphate-ion containing bath before the plating with Cu (from a $CuSO_4$-bath), brass or bronze having a tin content of between about 0,5 and 16 % weight.

2

An alternative continuous process relates to the addition of a sufficient amount of extra and sufficiently oxydising agents in a conventional pickling bath (eg. HCl) before the wire is plated with copper, brass or bronze. Said oxydising agents should of course be able to oxydise iron and will not form a metal deposit on the wire surface. A further suitable method relates to electrolytic pickling in HCl, eg. with alternate current. Still another advantageous method relates to the addition of some oxidising agents to the plating bath. By these treatments, the oxygen and carbon content at the wire surfaces are generally increased versus that on conventionally pickled wires. This means that during the etching process, Fe from the wire surface is preferentially dissolved versus the iron carbides (and possibly iron oxides) which may generally be present at the wire surfaces. This dissolution creates micro-cavities and pores into the wire surface whereby it loses its brightness. This results in a decrease of the L-value as described above. As a result of this microroughening on the bare wire a lower L-value (brightness) is also observed on the coated wire, i.e. after applying a conventional adhesion promoting metal coating layer such as eg. copper than for a wire with a similar coating but non pre-etched (roughened) according to the invention. The thin coating will generally follow the unevenness (micro-cavities) of the wire surface which will result in a rather dark and dull shaded wire surface appearance. The metal coating layer may be copper or bronze with eg. 0,5 to 3 % weight Sn or brass with a copper content between 60 and 72 % weight.

An embodiment of the invention will now be described by way of example in view of clarifying some details thereof and providing evidence of the improved adhesion behaviour and performance.

A number of conventionally drawn circular bead wires (steel wires with a carbon content of at least 0,6 %) with a diameter d of 0,96 mm (set A) resp. 1,55 mm (set B) were continuously passed through a specially designed pickling installation in view of producing a micro-roughening effect at their surfaces. The wires were subsequently conventionally electroless plated in a $CuSO_4$-bath with a copper coating (coating weight about 0,3 to 0,7 g Cu per kg of wire). Both the uncoated and the coated wires showed a dull and dark shaded appearance in comparison to non roughened wires. The L-value of the thus treated bare wires was determined as described above.

The wire-sets treated according to the invention were embedded in a number of rubber compounds and vulcanised. Their adhesion capacity was further determined according to a conventional pull out test and compared with the adhesion behaviour of conventional bead wires of the same diameter and composition and without having been subjected to the micro-surface roughening treatment according to the invention.

The electrolytic pickling line for set A comprised, downstream a conventional HCl-pickling bath (about 50°C and with about 200 g/l HCl), four consecutive cells wherein the wire was alternatively polarised as anode respectively as cathode. The electrolyte was a solution of 200 g $Na_2SO_4$ per l. at 40°C. The treatment time at a current density of 100 $A/dm^2$ of the wire in the electrolytic pickling line was about 2 seconds. After rinsing and electroless plating with copper, the wires were properly embedded and vulcanised in different rubber compounds (Cp 1 to Cp 5) and the adhesion value (N) was determined. The results are given in table 1 stating also the results for the corresponding L-value for a number of said pickled wires (sets A and B) from which the copper coating was removed and according to the invention (indicated "Inv."). Each time the comparison with a conventional (non roughened) bead wire is given (reference samples identified as "Ref") after similar removal of its copper coating.

The removal of the Cu-coating is carried out in a conventional way with an ammonium persulphate-solution whereafter the bare wire is rinsed and dried. Removal of the metal coating will of course always be carried out with agents which do not dissolve or attack the steel wire itself.

3

Table 1

| Cp | compound No | Adhesion (N) | d (mm) | L |
|---|---|---|---|---|
| 1 | Ref | 653 | 0,96 | 61 |
| | Inv | 844 | 0,96 | 43.2 |
| 2 | Ref | 798 | 0,96 | 62.5 |
| | Inv | 1076 | 0,96 | 48.3 |
| 3 | Ref | 809 | 0,96 | 57.5 |
| | Inv | 1003 | 0,96 | 47,6 |
| 4 | Ref | 616 | 0,96 | 54.7 |
| | Inv | 855 | 0,96 | 43.8 |
| 5 | Ref | 391 | 1,55 | 53.8 |
| | Inv | 497 | 1,55 | 42,4 |

It is clear from table 1 that the adhesion performance (N) increases substantially when comparing for the same rubber compound the Reference wire (Ref) with the Invention wire (Inv). The registered improvement is on the average over 30 %.

It is assumed that the micro roughened wire surface is comparable to a dispersion of copper coated microcavities and pores between oxyde and carbide grains (created by controlled etching). The copper will generally be better bonded in pores than on said grains. Upon vulcanisation of rubber to said surface (and after ageing) copper sulfide particles may be formed which are responsible for deterioration of the adhesion performance. Presumably however, these sulfide particles remain better anchored in the pores and cavities thereby refraining deterioration of the adhesion capacity.

When the steel wire according to the invention is a bead wire, then the invention of course relates also to a vehicle tire having its bead area reinforced with said wire. In principle any elastomeric body can be reinforced with steel wires according to the invention.

**Claims**

1. A round steel wire for reinforcement of elastomers having a roughened surface and a metal coating layer for increasing the adhesion capacity to elastomers, characterised in that the wire has a diameter d of between 0,8 mm and 2 mm and that the bare wire, (i.e. after removal of the coating layer) has a brightness factor L in said diameter range meeting the relation $38 \leq Ld^{1/3} \leq 50$.

2. A steel wire according to claim 1 wherein
   $0,89 \leq d \leq 1,60$ mm

3. A steel wire according to claim 1 wherein the metal coating layer has a weight of 0,5 to 2g per $m^2$ of wire.

4. A steel wire according to claim 1 or 2 wherein the metal coating layer is a copper layer.

5. A steel wire according to claim 1 wherein the coating layer is a bronze layer with a tin content of between 0,5 and 16 % weight.

6. A steel wire according to claim 5 wherein the bronze layer has a tin content of between 0,5 and 3 % weight.

7. A steel wire according to claim 1 wherein the metal coating is a brass layer with a copper content of between 60 and 72 % weight.

8. A bead wire according to claim 1 for reinforcement of a vehicle tire bead area.

**9.** An elastomeric body reinforced with a wire according to claim 1.

**10.** A vehicle tire, having a bead area reinforced with a bead wire according to claim 6.

**11.** A process for manufacturing a steel wire as defined in claim 1 comprising continuously and controllably micro-roughening the surface of said steel wire by etching the wire surface during a pickling treatment and before application of an adhesion promoting metal coating layer to said surface.

**12.** A process according to claim 11 wherein said pickling treatment comprises an electrolytic pickling in a sulphate-ion containing bath.

**13.** A process according to claim 11 wherein said pickling treatment comprises the addition of extra oxydising agents in a conventional pickling bath.

## Patentansprüche

**1.** Rundstahldraht zur Verstärkung von Elastomeren mit einer aufgerauhten Oberfläche und einem Metallüberzug zur Erhöhung des Haftvermögens an Elastomeren, dadurch gekennzeichnet, dass der Draht einen Durchmesser d von 0,8 bis 2 mm hat und dass der blanke Draht (nach dem Entfernen des Überzugs) in diesem Durchmesserbereich einen Helligkeitsfaktor L hat, der der Beziehung $38 \leq Ld^{1/3} \leq 50$ genügt.

**2.** Stahldraht nach Anspruch 1, wobei $0,89 \leq d \leq 1.60$ mm ist.

**3.** Stahldraht nach Anspruch 1, wobei der Metallüberzug ein Gewicht von 0,5 bis 2 g je $m^2$ des Drahts hat.

**4.** Stahldraht nach Anspruch 1 oder 2, wobei der Metallüberzug ein Kupferüberzug ist.

**5.** Stahldraht nach Anspruch 1, wobei der Überzug ein Bronzeüberzug mit einem Zinngehalt von 0,5 bis 16 Gew.-% ist.

**6.** Stahldraht nach Anspruch 5, wobei der Bronzeüberzug einen Zinngehalt von 0,5 bis 3 Gew.-% hat.

**7.** Stahldraht nach Anspruch 1, wobei der Metallüberzug ein Messingüberzug mit einem Kupfergehalt von 60 bis 72 Gew.-% ist.

**8.** Wulstdraht nach Anspruch 1 zur Verstärkung des Wulstbereichs eines Fahrzeugreifens.

**9.** Elastomerer Körper, der durch einen Draht nach Anspruch 1 verstärkt ist.

**10.** Fahrzeugreifen mit einem Wulstbereich, der durch einen Wulstdraht verstärkt nach Anspruch 6 verstärkt ist.

**11.** Verfahren zur Herstellung eines Stahldrahts nach Anspruch 1 umfassend ein kontinuierliches und kontrollierbares Mikroaufrauhen der Oberfläche des Stahldrahts durch Ätzen der Drahtoberfläche während einer Abbeizbehandlung und vor dem Auftragen eines haftfördernden Metallüberzugs auf die Drahtoberfläche.

**12.** Verfahren nach Anspruch 11, wobei die Abbeizbehandlung ein elektrolytisches Abbeizen in einem Sulfationen enthaltenden Bad umfasst.

**13.** Verfahren nach Anspruch 11, wobei die Abbeizbehandlung das Zusetzen von besonders stark oxidierenden Mitteln in einem herkömmlichen Abbeizbad umfasst.

## Revendications

**1.** Fil d'acier arrondi pour le renforcement d'élastomères possédant une surface rugueuse et une couche de revêtement métallique pour l'augmentation de la capacité d'adhésion aux élastomères, caractérisé en ce qu'il présente un diamètre d compris entre environ 0,8 mm et 2 mm et en ce que le fil nu (c.à.d. après enlèvement de la couche de revêtement) présente un facteur de brillance L pour ledit intervalle de diamètre satisfaisant à la relation :

$$38 \leq L.d^{1/3} \leq 50.$$

2. Fil d'acier selon la revendication 1, dans lequel :

$$0,89 \leq d \leq 1,60 \text{ mm.}$$

3. Fil d'acier selon la revendication 1, dans lequel la couche de revêtement métallique possède un poids de 0,5 à 2 g par $m^2$ de fil.

4. Fil d'acier selon la revendication 1 ou 2, dans lequel la couche de revêtement métallique est une couche de cuivre.

5. Fil d'acier selon la revendication 1, dans lequel la couche de revêtement est une couche de bronze avec une proportion d'étain comprise entre 0,5 et 16 % en poids.

6. Fil d'acier selon la revendication 5, dans lequel la couche de bronze comprend une proportion d'étain comprise entre 0,5 et 3 % en poids.

7. Fil d'acier selon la revendication 1, dans lequel le revêtement métallique est une couche de laiton avec une proportion de cuivre comprise entre 60 et 72 % en poids.

8. Fil de talon selon la revendication 1, pour le renforcement d'une zone de talon de pneumatique de véhicule.

9. Corps en élastomère renforcé par un fil selon la revendication 1.

10. Pneumatique de véhicule comportant une zone de talon renforcée par un fil de talon selon la revendication 6.

11. Procédé de fabrication d'un fil d'acier selon la revendication 1, comprenant un micro-traitement de rugosité, en continu et de façon commandée, de la surface dudit fil d'acier par attaque chimique de la surface du fil lors d'un traitement de décapage et avant l'application d'une couche de revêtement métallique facilitant l'adhésion sur ladite surface.

12. Procédé selon la revendication 11, selon lequel ledit traitement de décapage comprend un décapage électrolytique dans un bain contenant des ions de sulfate.

13. Procédé selon la revendication 11, selon lequel ledit traitement de décapage comprend l'addition d'agents additionnels d'oxydation dans un bain usuel de décapage.